# EUROPÄISCHE PATENTSCHRIFT

(11) **EP 1 158 250 B1**
(45) Veröffentlichungstag und Bekanntmachung des Hinweises auf die Patenterteilung: **24.11.2004**
(21) Anmeldenummer: 01109215.2
(22) Anmeldetag: 14.04.2001
(51) Int. Cl.: F24D 19/10

(54) **Vorrichtung zur Erfassung der Wärmeabgabe eines Heizkörpers und Regelung der Raumtemperatur**
Apparatus for detecting the heat output of a radiator and regulating the room temperature
Appareil pour détecter l'émission de chaleur d'un radiateur et régler la température de l'enceinte

(30) Priorität: 20.05.2000 DE 20009158 U
(43) Veröffentlichungstag der Anmeldung: 28.11.2001
(73) Patentinhaber: Techem Energy Services GmbH & Co. KG, 65760 Eschborn (DE)
(72) Erfinder: Simon, Winfried, 64579 Gernsheim (DE)
(74) Vertreter: KEIL & SCHAAFHAUSEN

(56) Entgegenhaltungen:
- DE-A- 3 335 226
- DE-A- 3 405 774
- DE-A- 3 644 966
- DE-U- 29 505 665
- DE-U- 29 710 248

## Beschreibung

Die Erfindung betrifft eine Vorrichtung zur Erfassung der Wärmeabgabe eines Heizkörpers und Regelung der Raumtemperatur mit einem Heizkostenverteiler zur Erfassung der Heizkosten, mit einem Heizkörperregler zur Regulierung des Durchflusses von Heizmedium durch den Heizkörper sowie mit Sensoren zur Erfassung der Vorlauf-, Rücklauf- und Raumtemperatur.

In Deutschland müssen gemäß Heizkostenverordnung die Heizkosten in Mehrfamilienhäusern erfasst und entsprechend dem individuellen Verbrauch abgerechnet werden. Zur Verbrauchserfassung werden Heizkostenverteiler verwendet, die bspw. als klassische Verdunster, Wärmezähler oder heute auch sehr verbreitet als elektronische Geräte ausgeführt sind. Zur Ermittlung des Heizungsverbrauchs wird bei den Verdunstern die im Messzeitraum verdunstete Flüssigkeitsmenge abgelesen. Die elektronischen Heizkostenverteiler errechnen den Verbrauch üblicherweise mit Hilfe des Zweifühler-Verfahrens, bei dem Raumtemperatur und Temperatur des Heizkörpers erfasst werden. Da die Temperatur des Heizkörpers sehr stark unterschiedlich ist, muss der Anbringungsort für den entsprechenden Sensor sorgfältig gewählt werden.

Die Regelung der Raumtemperatur, die in Deutschland gemäß Energieeinsparungsgesetz ebenfalls vorgeschrieben ist; wird üblicherweise unabhängig von der Erfassung der Heizkosten durchgeführt. Hierzu sind Thermostatventile an den Heizkörpern weit verbreitet. Neben diesen rein mechanischen Reglern mit Dehnungskörper kommen vermehrt auch elektronische Regler mit verbesserten Regeleigenschaften zum Einsatz, die heizungsunabhängige Energieeinträge, wie Sonneneinstrahlung oder innere Energiequellen, besser nutzen können. Außerdem erlauben diese Geräte eine Programmierung individueller Zeitprofile, wodurch zusätzlich Energie eingespart werden kann. Die Heizkörperregelung erfolgt auf der Basis der gemessenen Raumtemperatur.

Es sind auch Systeme bekannt, bei denen die Heizkörperregelung und die Heizkostenerfassung zusammengefasst sind. Bei einem bekannten System ist eine Elektronik auf Wohnungsebene per Draht mit sogenannten Raummodulen in jedem Raum verbunden. Diese Module bilden Schnittstellen zu Sensoren für die Raum-, Vorlauf- und Rücklauftemperatur. Die Sensoren sind in einzelnen Gehäusen aufgenommen und jeweils über Draht an das Raummodul angeschlossen. Aus den gemessenen Größen und der Heizkörperdaten kann die verbrauchte Heizenergie im Raum ermittelt werden. Problematisch ist der hohe Verdrahtungsaufwand, der die Kosten stark erhöht und eine Nachrüstung im Gebäudebestand ("Altbau") quasi unmöglich macht.

In dem deutschen Gebrauchsmuster DE 297 10 248 U1 wird eine kombinierte Vorrichtung zur Wärmeverbrauchserfassung und zur Regelung der Heizleistung eines Heizkörpers beschrieben, die ein Ventil und eine Ventilbetätigungseinrichtung sowie einen Vorlauf-, Rücklauf- und Raumlufttemperatursensor aufweist. Der Vorlauftemperatursensor und der Raumlufttemperatursensor sind zu einer baulichen Einheit vereint, und die Vorrichtung mit den Sensoren ist nahe bei jedem Heizkörper angeordnet, so dass sich der Verkabelungsaufwand reduzieren lässt.

Aus der DE 34 05 774 A1 ist eine vergleichbare Vorrichtung mit einem Vorlauf-, Rücklauf- und Raumlufttemperatursensor bekannt, wobei der Raumtemperaturfühler in das Gerätegehäuse der Vorrichtung, in dem auch die Vorlauftemperatur erfasst wird, integriert ist.

Bei den beiden letztgenannten Vorrichtungen kann zwar auf die Verlegung eines Kabels zur Erfassung der Raumtemperatur durch einen separat im Raum angebrachten Temperatursensor verzichtet werden, jedoch kann die Raumtemperatur nur mit einer erheblichen Unsicherheit bestimmt werden. Dies liegt daran, dass der Raumtemperatursensor an dem Heizungsvorlauf angeordnet ist, der sich häufig in schlecht zugänglichen Raumnischen befindet, in denen bspw. kaum Luftzirkulation stattfindet, so dass sich die von dem Heizkörper abgestrahlte Wärme in diesen Nischen staut. Wenn das Gehäuse am Vorlauf neben einem sehr tiefen Heizkörper angeordnet ist, ist der Raumtemperatursensor unter Umständen sogar direkter Strahlungswärme von dem Heizkörper ausgesetzt.

Es ist Aufgabe der vorliegenden Erfindung, bei einer Vorrichtung der eingangs genannten Art auf kostengünstige Weise eine verlässliche Raumtemperaturmessung zu ermöglichen.

Diese Aufgabe wird im Wesentlichen dadurch gelöst, dass der Rücklauftemperatursensor und der Raumtemperatursensor als in einem gemeinsamen Gehäuse angeordneter Zweifachsensor ausgebildet sind, der die Rücklauftemperatur des Heizmediums und die Temperatur der vom Heizkörper angesaugten Raumluft (Ansaugtemperatur) misst.

Die vorliegende Erfindung nutzt dabei die thermodynamische Situation eines geheizten Raumes aus. Am Heizkörper erwärmt sich die Luft und steigt durch die geringer werdende Dichte bis zur Decke auf. Im Raum kühlt sich die erwärmte Luft allmählich ab und sinkt auf den Boden. Die kühlere Bodenluft wird von dem Heizkörper angesaugt und der Kreislauf beginnt von Neuem. Dabei bildet sich eine stetige sog. Raumluftwalze aus, die unabhängig von der Einbausituation des Heizkörpers entsteht, da sie Voraussetzung für das Funktionieren der Heizung ist. Der Rücklauftemperatursensor wird thermisch gut an den Heizkörper angekoppelt, um die Rücklauftemperatur möglichst gut zu erfassen. Dagegen wird der Raumlufttemperatursensor, thermisch von dem Heizkörper abgetrennt.

Unter Vorlauf- und Rücklauftemperatur des Heizmediums sind hierbei die oberen bzw. unteren Temperaturwerte des Heizmediums beim Durchlauf durch den Heizkörper zu verstehen. Während der obere Temperaturwert ziemlich genau der Vorlauftemperatur entspricht, liegt die untere Temperatur nicht notwendigerweise nur an der Rücklaufleitung, sondern je nach Führung des Heizmediums durch den Heizkörper ggf. auch in dessen Mitte vor. Die Anordnung des "Rücklauftemperatursensors" ist daher nicht auf die Nähe der Rücklaufleitung beschränkt.

Gemäß einer bevorzugten Ausgestaltung der Erfindung ist vorgesehen, dass zwischen dem Rücklauftemperatursensor und dem Raumlufttemperatursensor eine thermische Isolation vorgesehen ist, die den Raumtemperatursensor besonders effektiv von der Strahlungswärme des Heizkörpers abschirmt.

Zur Kompensation einer möglicherweise nicht vollkommenen Trennung von Rücklauftemperatur (unterer Temperatur) und Ansaugtemperatur in dem Zweifachsensor weist die Vorrichtung erfindungsgemäß eine Korrektureinrichtung auf.

Um den Raumluftsensor direkt im Ansaugluftstrom anzuordnen, ist der Zweifachsensor vorzugsweise an der Unter- oder Frontseite des Heizkörpers jeweils im Bereich des Rücklaufs angeordnet. Vorteilhaft ist hierbei auch, dass die von dem Heizkörper erwärmte Luft nach oben steigt und den unten am Heizkörper angeordneten Temperatursensor nicht beeinflusst.

Besonders einfach kann der Zweifachsensor mittels einer Draht- oder Funkverbindung oder über eine andere drahtlose Verbindung mit dem Heizkörperregler und/oder dem Heizkostenverteiler verbunden sein. Ein Kabel lässt sich einfach durch oder hinter dem Heizkörper verlegen, so dass die Installation des Zweifachsensors einfach und preiswert ist. Darüber hinaus kann dasselbe Kabel zur Übertragung der Werte beider Temperatursensoren in eine zentrale Elektronik von Heizkörperregler und Heizkostenverteiler verwendet werden.

Der Heizkörperregler kann am Vorlauf des Heizkörpers angeordnet sein und einen integrierten Vorlauftemperatursensor aufweisen. In dieser Anordnung kann sowohl der Durchfluss des Heizmediums in den Heizkörper einfach reguliert werden, als auch die Temperatur des Heizmediums beim Eintritt in den Heizkörper zuverlässig bestimmt werden.

Um die Messtechnik und die Regeleigenschaften der Vorrichtung weiter zu verbessern, kann der Heizkörperregler zusätzlich einen Strömungssensor aufweisen.

In einer kostengünstigen Ausführung der Vorrichtung sind der Heizkörperregler und der Heizkostenverteiler in einem Gerätegehäuse zusammengefasst. Mit einem derartigen Kombinationsgerät werden die Anzahl der bei der Herstellung benötigten Teile und damit die Herstellungskosten weiter reduziert.

Zur Anzeige der von den Temperatursensoren gemessenen Temperatur, der erfassten Heizkosten und/oder zur Eingabe von Regelparametern für den Heizkörperregler sind vorzugsweise in dem Gerätegehäuse ein Display und/oder eine Benutzerschnittstelle vorgesehen. Diese Ausgestaltung eignet sich besonders für Stand-Alone-Ausführungen.

Zur Einbindung in ein übergeordnetes Wohnungssystem können der Heizkörperregler und/oder der Heizkostenverteiler eine Schnittstelle zur Verbindung mit einem Regel- und Steuersystem aufweisen.

Die Erfindung wird nachfolgend anhand von Ausführungsbeispielen und der Zeichnung näher beschrieben.

Es zeigen:
- Fig. 1: schematisch den Luftstrom in einem beheizten Raum und
- Fig. 2: schematisch einen Querschnitt durch die erfindungsgemäße Vorrichtung zur Erfassung der Wärmeabgabe eines Heizkörpers und zur Regelung der Raumtemperatur.

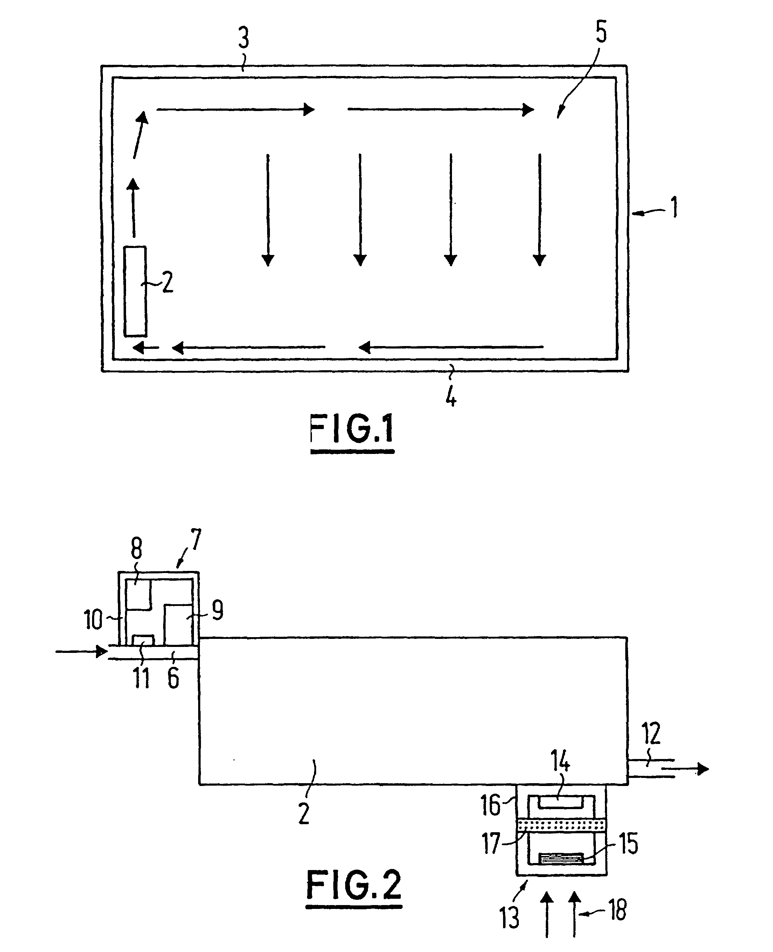

In Fig. 1 ist die thermodynamische Situation eines durch einen Heizkörper 2 geheizten Raumes 1 dargestellt. Am Heizkörper 2 erwärmt sich die Luft und steigt durch die geringer werdende Dichte bis zur Decke 3 auf. Im Raum 1 kühlt sich die erwärmte Luft allmählich ab und sinkt auf den Boden 4. Die kühlere Bodenluft wird von dem Heizkörper 2 angesaugt und der Kreislauf beginnt von Neuem. Dabei bildet sich eine stetige sog. Raumwalze 5 aus, die Voraussetzung für das Funktionieren der Heizung ist und sich ähnlich auch in verwinkelten oder verbauten Räumen ausbildet. Die zu der Raumwalze 5 führenden Temperaturdifferenzen innerhalb des Raumes sind recht gering, da aufgrund der guten Isolierung keine großen Wärmeströme nach außen abgeführt werden. Die von dem Heizkörper an seiner Unterseite angesaugte abgekühlte Raumluft hat daher nur eine geringfügig niedrigere Temperatur als die mittlere Raumlufttemperatur, die im allgemeinen für eine Höhe von 1,5 m definiert ist. Bei größeren Temperaturdifferenzen würde das Behaglichkeitsgefühl der Bewohner in dem Raum 1 leiden.

Bei der erfindungsgemäßen Vorrichtung ist, wie aus Fig. 2 ersichtlich, zur Erfassung der Wärmeabgabe des Heizkörpers und zur Regelung der Raumtemperatur an der Vorlaufleitung 6 des Heizkörpers 2 ein Kombinationsgerät 7 angeordnet, das einen Heizkostenverteiler 8 und einen Heizkörperregler 9 in einem gemeinsamen Gerätegehäuse 10 aufweist. Zusätzlich befindet sich in dem Kombinationsgerät 7 ein Vorlauftemperatursensor 11, der direkt an der Vorlaufleitung 6 des Heizkörpers 2 angeordnet ist und die Temperatur des in den Heizkörper 2 einströmenden Heizmediums misst.

An der Unterseite des Heizkörpers 2 ist bspw. im Bereich der Rücklaufleitung 12 ein Zweifachsensor 13 angeordnet, der in einem gemeinsamen Gehäuse 16 einen Rücklauftemperatursensor 14 und einem Raumtemperatursensor 15 aufweist. Der Zweifachsensor 13 kann auch an einer anderen Stelle des Heizkörpers 2 angeordnet sein, an der er die untere Temperatur des Heizmediums erfasst. Der Rücklauftemperatursensor 14 befindet sich an der dem Heizkörper 2 zugewandten Seite des Gehäuses 16 des Zweifachsensors 13 und ist thermisch gut an den Heizkörper 2 angekoppelt. Auf der dem Heizkörper 2 abgewandten Seite des Rücklauftemperatursensors 14 ist eine thermische Isolierung 17 vorgesehen, die auch das Gehäuse 16 selbst unterbricht. Mit Hilfe dieser thermischen Isolierung 17 wird erreicht, dass der dem Heizkörper 2 abgewandte Gehäuseteil mit dem Raumtemperatursensor 15, der die Temperatur der vom Heizkörper angesaugten Luft 18 (Ansaugtemperatur) misst, thermisch vom Heizkörper 2 abgetrennt ist und nicht durch die Heizkörpertemperatur beeinflusst wird. Auf die Isolierung 17 kann aber auch verzichtet werden. Eine mögliche Verfälschung des Messwerts der Ansaugtemperatur aufgrund einer nicht vollkommenen Trennung von Rücklauftemperatur und Temperatur der angesaugten Raumluft, kann in einer Korrektureinrichtung korrigiert werden, indem sogenannte "C-Werte" erfasst und im Algorithmus zur Temperaturbestimmung berücksichtigt werden. Die Korrektur hängt von Aufbau des Zweifachsensors 13 ab.

Da der Raumtemperatursensor 15 vor der vom Heizkörper 2 abgestrahlten Wärme geschützt ist und in dem Strom der angesaugten Luft liegt, kann mit Hilfe dieses Zweifachsensors 13 sehr gut auf die mittlere Raumtemperatur zurückgeschlossen werden. Damit ist auch die Eingangsgröße für den Regler wesentlich besser definiert als beim Stand der Technik. Zudem ist die Temperatur der angesaugten Luft ein besserer Ausgangswert für die Heizkostenerfassung als die durchschnittliche Raumtemperatur, da sie die abgegebene Leistung des Heizkörpers direkt bestimmt. Es wird somit eine zuverlässige Heizkostenerfassung und Heizkörperregelung erreicht, wobei der Herstellungs- und Installationsaufwand gering gehalten wird. Eine Nachrüstung des Gebäudebestandes ist problemlos möglich.

Bei bestimmten Einbausituationen oder Heizkörpertypen ist eine zuverlässige Raumlufttemperaturmessung auch mit einem oben am Heizkörper angeordneten Raumtemperaturmesser möglich. Daher kann im Heizkörperregler 9 vorzugsweise ebenfalls im Gerätegehäuse 10 ein zusätzlicher Raumtemperatursensor vorgesehen sein.

### Bezugszeichenliste:

- 1: Raum
- 2: Heizkörper
- 3: Decke
- 4: Boden
- 5: Raumwalze
- 6: Vorlaufleitung
- 7: Kombinationsgerät
- 8: Heizkostenverteiler
- 9: Heizkörperregler
- 10: Gerätegehäuse
- 11: Vorlauftemperatursensor
- 12: Rücklaufleitung
- 13: Zweifachsensor
- 14: Rücklauftemperatursensor
- 15: Raumtemperatursensor
- 16: Gehäuse
- 17: thermische Isolierung
- 18: angesaugte Luft

## Patentansprüche

1. Vorrichtung zur Erfassung der Wärmeabgabe eines Heizkörpers (2) und Regelung der Raumtemperatur mit einem Heizkostenverteiler (8) zur Erfassung der Heizkosten, mit einem Heizkörperregler (9) zur Regulierung des Durchflusses von Heizmedium durch den Heizkörper (2) sowie mit Sensoren (11, 14, 15) zur Erfassung der Vorlauf-, der Rücklauf- und der Raumtemperatur, **dadurch gekennzeichnet, dass** der Rücklauftemperatursensor (14) und der Raumtemperatursensor (15) als in einem gemeinsamen Gehäuse (16) angeordneter Zweifachsensor (13) ausgebildet sind, und dass der Zweifachsensor (13) die Rücklauftemperatur des Heizmediums und die Temperatur der von dem Heizkörper (2) angesaugten Raumluft (Ansaugtemperatur) misst.

2. Vorrichtung nach Anspruch 1, **dadurch gekennzeichnet, dass** zwischen dem Rücklauftemperatursensor (14) und dem Raumtemperatursensor (15) eine thermische Isolation (17) vorgesehen ist.

3. Vorrichtung nach einem der vorhergehenden Ansprüche, **dadurch gekennzeichnet, dass** die Vorrichtung eine Korrektureinrichtung zur Kompensation einer nicht vollkommenen Trennung von Rücklauftemperatur und Ansaugtemperatur aufweist.

4. Vorrichtung nach einem der vorhergehenden Ansprüche, **dadurch gekennzeichnet, dass** der Zweifachsensor (13) im Bereich der Rücklaufleitung (12) auf der Unter- oder Vorderseite des Heizkörpers (2) angeordnet ist.

5. Vorrichtung nach einem der vorhergehenden Ansprüche, **dadurch gekennzeichnet, dass** der Zweifachsensor (13) mittels einer Draht- oder Funkverbindung mit dem Heizkörperregler (9) und/oder dem Heizkostenverteiler (8) verbunden ist.

6. Vorrichtung nach einem der vorhergehenden Ansprüche, **dadurch gekennzeichnet, dass** der Heizkörperregler (9) am Vorlauf (6) des Heizkörpers (2) angeordnet ist und einen integrierten Vorlauftemperatursensor (11) aufweist.

7. Vorrichtung nach einem der vorhergehenden Ansprüche, **dadurch gekennzeichnet, dass** der Heizkörperregler (9) einen Strömungssensor aufweist.

8. Vorrichtung nach einem der vorhergehenden Ansprüche, **dadurch gekennzeichnet, dass** der Heizkörperregler (9) und der Heizkostenverteiler (8) in einem Gerätegehäuse (10) zu einem Kombinationsgerät (7) zusammengefasst sind.

9. Vorrichtung nach Anspruch 8, **dadurch gekennzeichnet, dass** in dem Gerätegehäuse (10) ein Display und/oder eine Benutzerschnittstelle vorgesehen sind.

10. Vorrichtung nach einem der vorhergehenden Ansprüche, **dadurch gekennzeichnet, dass** der Heizkörperregler (9) und/oder der Heizkostenverteiler (8) eine Schnittstelle zur Verbindung mit einem übergeordneten Regel- und Steuersystem aufweist.

11. Vorrichtung nach einem der vorhergehenden Ansprüche, **dadurch gekennzeichnet, dass** am Heizkörperregler (9) ein zusätzlicher Raumlufttemperatursensor vorgesehen ist.

## Claims

1. An arrangement for determining the heat output of a radiator (2) and for controlling the room temperature, comprising a heating expenses distributor (8) for determining the heating expenses, a radiator regulator (9) for regulating the passage of heating medium through the radiator (2), and sensors (11,14,15) for determining the forward and return flow temperature and the room temperature, **characterized in that** the return flow temperature sensors ( 14) and the room temperature sensor (15) are designed as a dual sensor (13) arranged in a common housing (16), and that the dual sensor (13) meters the return flow temperature of the heating medium and the temperature of the ambient air (suction temperature) sucked by the radiator (2).

2. An arrangement of claim 1, **characterized in that** provided between the return flow temperature sensor ( 14) and the ambient temperature sensor (15) is a thermal insulation( 17).

3. An arrangement according to any one of the preceding claims, **characterized in that** the arrangement comprises an adjuster for compensating an inadequate separation between return flow temperature and suction temperature.

4. An arrangement according to any one of the preceding claims, **characterized in that** the dual sensor (13) is arranged within the area of the return flow conduit (12) on the bottom or front side of the radiator (2).

5. An arrangement according to any one of the preceding claims, **characterized in that** the dual sensor (13) is connected to the radiator regulator (9) AND/or the heating expenses distributor (8) by means of a wire or wireless connection.

6. An arrangement according to any one of the preceding claims, **characterized in that** the radiator regulator (9) is disposed on the forward flow unit (6) of the radiator (2) and comprises an integrated forward flow temperature sensor (11).

7. An arrangement according to any one of the preceding claims, **characterized in that** the radiator regulator (9) comprises a flow sensor.

8. An assembly according to any one of the preceding claims, **characterized in that** the radiator regulator (9) and the heating expenses distributor (8) are united in an instrument compartment (10) to form a combined unit (7).

9. An assembly according to claim 8, **characterized in that** a display and/or a user interface are provided in the instrument compartment (10).

10. An assembly according to any one of the preceding claims, **characterized in that** the radiator regulator (9) and/or the heating expenses distributor (8) comprise an interface for connection to a superior regulating and control system.

11. An assembly according any one of the preceding claims, **characterized in that** provided on the radiator regulator (9) is an additional ambient temperature sensor.

## Revendications

1. Dispositif à déterminer le débit de chaleur d'un radiateur (2) et à réguler la température ambiante, comportant un distributeur (8) à déterminer les frais de chauffage, un mécanisme de réglage pour réguler le passage de milieu chauffe à travers du radiateur (2), et comportant des palpeurs (11, 14, 15) pour déterminer la température de courant d'aller, la température de courant retour et la température ambiante, **caractérisé en ce que** le palpeur (14) mesurant la température du courant retour et le palpeur ( 15) mesurant la température ambiante sont formés comme palpeur double ( 13) disposé dans un boîtier (16) commun, et que le palpeur double (13) mesure la température du courant retour du milieu chauffe et la température de l'air ambiant aspiré par le radiateur (2) (température d'aspiration).

2. Dispositif selon la revendication 1, **caractérisé en ce qu'**un isolateur (17) thermique est prévu entre le palpeur (14) mesurant la température du courant retour et le palpeur (15) mesurant la température ambiante.

3. Dispositif selon l'une des revendications précédentes, **caractérisé en ce que** le dispositif comporte un mécanisme correctif pour compenser une séparation insuffisante entre la température du courant retour et la température d'aspiration.

4. Dispositif selon l'une des revendications précédentes, **caractérisé en ce que** le palpeur double (13) dans la zone de la conduite retour (12) est prévu sur la face inférieure ou sur le front du radiateur (2).

5. Dispositif selon l'une des revendications précédentes, **caractérisé en ce que** le palpeur double (13), par l'intermédiaire de liaison par fil ou radio, est raccordé au régulateur de radiateur (9) et/ou au distributeur des frais de chauffage (8).

6. Dispositif selon l'une des revendications précédentes, **caractérisé en ce que** le régulateur (9) est prévu à la conduite d'aller (6) du radiateur (2) et qu'il comporte un palpeur intégré (11) à mesurer la température d'aller.

7. Dispositif selon l'une des revendications précédentes, **caractérisé en ce que** le régulateur (9) est prévu d'un palpeur de courant.

8. Dispositif selon l'une des revendications précédentes, **caractérisé en ce que** le régulateur (9) et le distributeur des frais de chauffage (8) sont disposés dans le boîtier d'instruments (10) en formant un appareil combiné (7).

9. Dispositif selon la revendication 8, **caractérisé en ce qu'**un display et/ou un interface d'usager sont prévus dans le boîtier d'instruments (10).

10. Dispositif selon l'une des revendications précédentes, **caractérisé en ce que** le régulateur (9) et le distributeur (8) sont prévus d'un interface pour raccorder à un système de réglage ou commande supérieur.

11. Dispositif selon l'une des revendications précédentes, **caractérisé en ce qu'**un palpeur à mesurer l'air ambiant supplémentaire est prévue au radiateur (9).
